# EUROPEAN PATENT SPECIFICATION

(11) **EP 4 577 992 B1**
(45) Date of publication and mention of the grant of the patent: **09.09.2026**
(21) Application number: 23753845.9
(22) Date of filing: 02.08.2023
(51) Int. Cl.: G06V 20/56, G06V 20/70, G06V 20/64, G06V 10/25, G06V 10/82, G06V 10/80

(54) **AUTOMATIC VISUAL PERCEPTION WITH A VEHICLE USING A CAMERA AND AN ULTRASONIC SENSOR SYSTEM**
AUTOMATISCHE VISUELLE WAHRNEHMUNG MIT EINEM FAHRZEUG UNTER VERWENDUNG EINER KAMERA UND EINES ULTRASCHALLSENSORSYSTEMS
PERCEPTION VISUELLE AUTOMATIQUE AVEC UN VÉHICULE À L'AIDE D'UNE CAMÉRA ET D'UN SYSTÈME DE CAPTEUR ULTRASONORE

(30) Priority: 22.08.2022 DE 102022121111
(43) Date of publication of application: 02.07.2025
(73) Proprietor: Connaught Electronics Ltd., Tuam, County Galway (IE)
(72) Inventor: MALVIYA, Akhilesh Kumar, Chennai, Tamil Nadu 600130 (IN); SCHOLZ, Niko Moritz, 96317 Kronach Neuses (DE); SISTU, Ganesh, Tuam (IE); DAS, Arindam, Chennai, Tamil Nadu 600130 (IN)
(74) Representative: Jauregui Urbahn, Kristian
(86) International application number: PCT/EP2023/071349
(87) International publication number: WO 2024/041857

(56) References cited:
- US-A1- 2022 026 918
- US-A1- 2022 057 806
- QI LI ET AL: "HDMapNet: An Online HD Map Construction and Evaluation Framework", ARXIV.ORG, CORNELL UNIVERSITY LIBRARY, 201 OLIN LIBRARY CORNELL UNIVERSITY ITHACA, NY 14853, 13 July 2021 (2021-07-13), XP091011436
- T. RODDICKR. CIPOLLA: "Predicting Semantic Map Representations from Images using Pyramid Occupancy Networks", IEEE / CVF CONFERENCE ON COMPUTER VISION AND PATTERN RECOGNITION (CVPR, 2020, XP002810347
- DUTTA PRAMIT ET AL: "ViT-BEVSeg: A Hierarchical Transformer Network for Monocular Birds-Eye-View Segmentation", 2022 INTERNATIONAL JOINT CONFERENCE ON NEURAL NETWORKS (IJCNN), IEEE, 18 July 2022 (2022-07-18), pages 1 - 7, XP034198914, DOI: 10.1109/IJCNN55064.2022.9891987
- NOURELDIN HENDY ET AL: "FISHING Net: Future Inference of Semantic Heatmaps In Grids", ARXIV.ORG, CORNELL UNIVERSITY LIBRARY, 201 OLIN LIBRARY CORNELL UNIVERSITY ITHACA, NY 14853, 17 June 2020 (2020-06-17), XP081697957

## Description

The present invention is directed to a method for automatic visual perception with a vehicle, to an electronic vehicle guidance system for a vehicle, to a vehicle with such an electronic vehicle guidance system and to a computer program product.

For partly automatic or fully automatic driving functions, the reliable automatic detection of objects in the environment of an ego vehicle is very important. It is known to use algorithms for automatic visual perception, also denoted as computer-vision algorithms, based on camera images of the ego vehicle's cameras for detecting, localizing and/or characterizing objects in the environment of the ego vehicle. Typical visual perception tasks include object detection tasks, detecting bounding boxes for objects, semantic segmentation tasks, size regression of objects, height regression of objects et cetera.

However, for certain environmental conditions, certain object types or object positions in the environment of the ego vehicle, the reliable perception and characterization of objects is a difficult task for known algorithms for automatic visual perception, which results in a reduced reliability and/or accuracy of the corresponding output. For example, such environmental conditions comprise low light scenarios such as twilight or nighttime scenarios, where the information contained in the camera images is very limited. Furthermore, the detection and characterization of objects in the environment of the vehicle, which have a particular low height from the ground, such as curbs, low walls, poles or unclassified or unknown objects is particularly demanding. This holds even more in case such objects should be characterized and detected at low light scenarios.

Algorithms for automatic visual perceptions may for example be based on trained artificial neural networks, in particular convolutional neural networks, CNN. In the document T. Roddick and R. Cipolla "Predicting Semantic Map Representations from Images using Pyramid Occupancy Networks", 2020 IEEE / CVF Conference on Computer Vision and Pattern Recognition (CVPR), 2020 or the corresponding preprint arXiv:2003.13402v1 ("Roddick and Cipolla" in the following) the authors describe an approach for estimating bird's eye view maps of the environment of autonomous vehicles directly from monocular images using a single end-to-end deep learning architecture. The architecture consists of a backbone network, a feature pyramid network, a bird's eye view transformation network and a topdown network. The backbone network, which may, for example be based on ResNet-50, extracts image features at multiple resolutions from the input image and the feature pyramid network augments the high resolution features with spatial context from lower pyramid layers. A stack of dense transform layers of the bird's eye view transformation network maps the image-based features into the bird's eye view and the topdown network processes the bird's eye view features and predicts the final semantic occupancy probabilities.

The feature pyramid network is based on the publication T. Lin et al.: "Feature Pyramid Networks for Object Detection", Proceedings of the IEEE Conference on Computer Vision and Pattern Recognition (CVPR), 2017 or the corresponding preprint arXiv:1612.03144v2 ("Lin et al." in the following).

It is an objective of the present invention to enhance the reliability and/or accuracy of automatic visual perception with a vehicle.

This objective is achieved by the respective subject-matter of the independent claims. Further implementations and preferred embodiments are a subject-matter of the dependent claims.

The invention is based on the idea to extract features from a camera image by a trained artificial neural network, transformed them into a top view perspective and fuse the transformed features with features extracted by the neural network from an ultrasonic map of the environment obtained from ultrasonic sensor signals of an ultrasonic sensor system of the vehicle. A visual perception task is then carried out depending on the fused features.

According to an aspect of the invention, a method for automatic visual perception with a vehicle, in particular a motor vehicle, is provided. According to the method, a camera image representing an environment of the vehicle is generated by a camera of the vehicle. At least one first feature map is generated, in particular by at least on computing unit of the vehicle, by applying a first encoder module of a trained artificial neural network to the camera image. A top view transformation module of the neural network is applied to the at least one first feature map, in particular by the at least one computing unit, to transform the at least one first feature map from a camera image plane perspective of the camera into a top view perspective, also denoted as bird's eye view or bird's eye view perspective.

An ultrasonic pulse is emitted into the environment by an ultrasonic sensor system of the vehicle, and at least one ultrasonic sensor signal is generated by the ultrasonic sensor system of the vehicle depending on reflected portions of the emitted ultrasonic pulse. A spatial ultrasonic map, in particular a two-dimensional spatial ultrasonic map, is generated in the top view perspective, in particular by the at least one computing unit, depending on the at least one ultrasonic sensor signal. At least one second feature map is generated by applying a second encoder module of the neural network to the ultrasonic map. A fused set of feature maps is generated by fusing the transformed at least one first feature map and the at least one second feature map, in particular by the at least one computing unit, for example by applying a fusion module of the neural network to the transformed at least one first feature map and the at least one second feature map. A first visual perception task is carried out by a first decoder module of the neural network depending on the fused set of feature maps, in particular by the at least one computing unit using the first decoder module of the neural network depending on the fused set of feature maps.

The method according to the invention for automatic visual perception may also be considered as a method comprising the described steps of generating the camera image and the at least one ultrasonic sensor signal and applying an algorithm for automatic visual perception to the camera image and the at least one ultrasonic sensor signal. The algorithm for automatic visual perception, which may also be denoted as computer vision algorithm or machine vision algorithm, comprises the trained artificial neural network.

An algorithm for automatic visual perception may be considered as a computer implemented algorithm for performing one or more visual perception tasks automatically. A visual perception task, also denoted as computer vision task, may for example, be understood as a task for extracting visually perceivable information from image data. In particular, the visual perception task may, in principle, be carried out by a human, which is able to visually perceive an image corresponding to the image data. In the present context, however, visual perception tasks are performed automatically without requiring the support of a human.

In the context of the present invention, the method and the algorithm for automatic visual perception is not carried out based on the camera image as sensor input exclusively, but also based on the at least one ultrasonic sensor signal or the ultrasonic map, respectively. Ultrasonic waves or pulses are not visible for humans. Nevertheless, the present algorithm used is denoted as an algorithm for automatic visual perception and, consequently, the method is denoted as a method for automatic visual perception.

Since, the involved sensor inputs, in particular the camera image and the at least one ultrasonic sensor signal, are generated by sensor systems of the vehicle, in particular the camera and the ultrasonic sensor system, the method may be considered as a method for automatic visual perception with the vehicle.

For example, the trained artificial neural network may be provided in a computer-readable way, for example, stored on a storage medium of the vehicle, in particular of the at least one computing unit.

The neural network comprises several modules including the first encoder module, the top view transformation module and the first decoder module. Modules may be understood as software modules or parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method for automatic visual perception is carried out. However, in other implementations, different modules may be trained or pre-trained individually. In other words, the method according to the invention corresponds to a deployment phase of the neural network.

The training itself may be carried out using conventional methods for training neural networks, in particular convolutional neural networks, CNN, such as supervised training approaches.

For generating the ultrasonic map depending on the at least one ultrasonic sensor signal, a further software module may be applied to the at least one ultrasonic sensor signal, wherein the further software module is not necessarily a part of the neural network. In particular, the further software module is not necessarily a trained or trainable module. However, in other implementations, the further software module may also be a trainable or trained module of the neural network.

For example, the first and the second encoder module may comprise one or more convolution layers, while the first decoder module comprises one or more deconvolution layers.

The encoder module may comprise one or more convolution layers, which extract the features of the at least one first feature map from the camera image. The spatial dimensions of the at least one first feature map may in general differ from the spatial dimensions of the camera image, depending on the architecture of the encoder and, in particular, the convolution layers, for example, the convolution kernels involved or used. In general, the camera image may be considered as a three-dimensional tensor of size H x W x C. Therein, H x W denotes the spatial size of the camera image, namely its height H and width W in terms of pixels of the camera image. C is the channel dimension and may for example correspond to different color channels in case of the camera image. It is also possible, however, that C equals 1 for the camera image. Each feature map i of the at least one first feature map also is characterized by a respective spatial size Hᵢ x Wᵢ and a channel number Cᵢ, which may, however, differ from the sizes and channel numbers of the camera image. The exact height Hᵢ and width Wᵢ as well as channel number Cᵢ of one of the first feature maps depends on the number of convolution layers used by the encoder module and the size and number of convolution kernels used. However, the features of the at least one feature map can still be considered to be given in the same camera image plane perspective as the camera image. In other words, directions corresponding to the height and width of the feature maps of the at least one first feature map correspond to the height and width directions in the original camera image, even though there may not be a one-to-one pixel correspondence between the features and the pixels of the camera image.

Algorithms to convert a camera image from the camera image plane perspective into a top view perspective are known per se. The camera image plane is, for example, perpendicular to a predefined longitudinal direction of the camera coordinate system, which may for example be parallel to an optical axis of the camera. The top view perspective corresponds to a perspective according to a top view plane, which is perpendicular to a predefined height axis. The height axis may for example be perpendicular to a road surface the vehicle is positioned on or, in other words, parallel to a vehicle height axis of the vehicle. This may in some cases be parallel to a further coordinate axis of the camera coordinate system. In general, the camera coordinate system may also be tilted or rotated.

According to the invention, however, not the camera image is transformed from the camera image plane perspective into the top view perspective but the individual first feature maps of the at least one first feature map are. In this way, it is achieved, that the at least one first feature map is directly comparable and fusible with the at least one second feature map originating from the ultrasonic map, which is also representing the environment in the top view perspective.

The top view transformation module may for example be designed as described in the publication of Roddick and Cipolla with respect to the multi-scale dense transformers or stack of dense transformer layers, respectively.

The ultrasonic sensor system comprises an ultrasonic emitter, which is configured to emit the ultrasonic pulse in the environment. Furthermore, the ultrasonic sensor system comprises at least one ultrasonic detector, each of the ultrasonic detectors configured to generate one of the at least one ultrasonic sensor signal. Apart from that, the ultrasonic sensor emitter and/or one or more further ultrasonic emitters of the ultrasonic sensor system may emit one or more further ultrasonic pulses, and the at least one ultrasonic sensor signal may also depend on reflected portions of those further emitted pulses.

In general, the emitters and detectors of the ultrasonic sensor system may be combined and designed as ultrasonic transducers or may be implemented separate from each other. In particular, reflected portions of an ultrasonic pulse emitted by an ultrasonic sensor may be detected by the same ultrasonic sensor, which is denoted as direct signal path, or by another ultrasonic sensor of the ultrasonic sensor system, which is denoted as indirect signal path.

Each ultrasonic sensor signal may for example be considered to represent an envelope of an ultrasonic wave corresponding to the reflected portions of the emitted pulse. Each ultrasonic sensor signal is then given by an amplitude of the respective sensor signal as a function of time. Since the speed of sound is known, in particular for a given air temperature in the environment, the amplitude as a function of time may be directly converted into an amplitude as a function of radial distance, wherein appropriate interpolation or averaging may be taken into account in case of an indirect signal path. In principle, it is possible to use different ultrasonic detectors at different positions and evaluate the at least one ultrasonic sensor signal to obtain not only radial distance information but also angular information regarding the sources of reflection in the environment relative to the ultrasonic emitter and/or detector. In this way, the two-dimensional top view ultrasonic map representing the environment may be generated based on the at least one ultrasonic sensor signal.

However, this is possible even if the angular information is not extracted from the combination of ultrasonic sensor signals. For example, in a simple approach each angular position or each angular position within a predefined angular field of view, may be treated equivalently such that the contribution of each ultrasonic sensor signal to the ultrasonic map is basically circular. However, also heuristic or empiric information can be used to improve the accuracy of the ultrasonic map. For example, the contribution of each ultrasonic sensor signal may be restricted to an angular field of view of the respective emitter and/or detector of the ultrasonic sensor system. Also, radial cut offs may be used.

However, alternatively or in addition, more accurate angular distributions may be employed to take into account the angular emission and/or detection characteristics of the ultrasonic emitter or the respective ultrasonic detector, respectively. For example, the intensity of the emitted ultrasonic pulse may be maximum along a longitudinal direction of the emitter and/or the detector sensitivity of the corresponding ultrasonic detector may be maximum along the longitudinal direction of the respective detector. Empirical or heuristically determined distributions, for example beta distributions, may be used to approximate the ultrasonic characteristics. In combination with the radial information obtained directly from the time-dependent at least one ultrasonic sensor signal, the ultrasonic map may be obtained as a two-dimensional spatial map, or, in other words, an ultrasonic image, in the top view perspective.

This has the advantage that the ultrasonic map may be treated analogously as known for camera images by the neural network, for example by passing it through one or more convolution layers of the second encoder module to extract respective features. Even though the content of the ultrasonic map may not be immediately interpretable for a human, the trained neural network is able to automatically interpret the encoded information similar as for camera images. By fusing the features obtained from the ultrasonic map with the features obtained from the camera image, the reliability of the first visual perception task and its output may be significantly improved, in particular for low light scenarios and/or objects with a relatively low distance from the ground. In particular, the ultrasonic sensor signals represent reflecting objects in the environment of the vehicle independent of the lighting conditions. Since the ultrasonic sensor system is mounted on the vehicle typically at relatively low positions over the ground, for example on a rear bumper, low objects may be reliably detected and characterized.

Fusing the at least one transformed first feature map and the at least one second feature map may comprise the application of known mechanisms for fusing feature maps, such as concatenation of the respective feature maps. For fusing, in some implementations, one or more of the at least one transformed first feature map and/or of the at least one second feature map may be upsampled or downsampled to achieve the desired spatial dimensions for further processing. For example, the fusion module is not necessarily trainable or trained.

For carrying out the first visual perception task, the first decoder module may be applied to the fused set of feature maps. In other implementations, a further network module of the neural network, for example, a topdown network module, may be applied to the fused set of feature maps, and the first decoder module is then applied to a corresponding output of the further network module.

In particular, a field of view of the camera may partially overlap with a field of view of the ultrasonic sensor system, in particular a joint field of view of all ultrasonic sensors of the ultrasonic sensor system involved in generating the at least one ultrasonic sensor signal. Consequently, the camera image and the at least one ultrasonic sensor signal represent at least in part the same spatial region of the environment. For example, the camera may be a rear-facing or side-facing camera of the vehicle and the ultrasonic sensor system may be mounted accordingly on a side and/or a rear end of the vehicle.

According to several implementations of the method for automatic visual perception, an intermediate set of feature maps is generated by applying a topdown network module of the neural network to the fused set of feature maps. The first visual perception task is carried out by applying the first decoder module to the intermediate set of feature maps.

For example, the architecture of the topdown network described in the publication of Roddick and Cipolla may be used. However, according to the invention, the topdown network module does not carry out the first visual perception task completely. Rather, the topdown network may be considered as a task agnostic processing block or task agnostic decoder block, which may process the fused set of feature maps to form a basis for the first and, in respective implementations, further visual perception tasks by providing the intermediate set of feature maps. In other words, while the topdown network represents a task agnostic processing block, the first decoder module is a task specific decoder module, which is specifically trained for carrying out the first visual perception task.

For example, a second visual perception task is carried out by a second decoder module of the neural network depending on the fused set of feature maps and/or a third visual perception task may be carried out may a third decoder module of the neural network depending on the fused set of feature maps. In particular, the first, the second and the third visual perception task differ from each other.

For example, the second visual perception task may be carried out by applying the second decoder module to the intermediate set of feature maps and/or the third visual perception task is carried out by applying the third decoder module to the intermediate set of feature maps.

As mentioned for the first decoder module, also the topdown network may comprise one or more deconvolution layers. The same holds analogously for the second decoder module and/or the third decoder module, in respective implementations.

Therein, the second and third decoder modules are, as described for the first decoder module, task-specific decoder modules trained specifically with respect to the second and third visual perception task, respectively. On the other hand, the output of the topdown network, namely the intermediate set of feature maps, may be used for all of the first, second and third visual perception task. It is conceivable to include more than tree visual perception tasks in the same way.

The first visual perception task may be one of an object height regression task, a semantic segmentation task and a bounding box detection task. Analogously, the second visual perception task may be one of the object height regression task, the semantic segmentation task and the bounding box detection task. Analogously, the third visual perception task may one of the object height regression task, the semantic segmentation task and the bounding box detection task.

Preferably, the first and the second visual perception task are different from each other. In respective implementations, the third visual perception task is preferably different from the first visual perception task and different from the second visual perception task. For example, the first visual perception task is the object height regression task, the second visual perception task is the semantic segmentation task, and the third visual perception task is the bounding box detection task.

Using two or three or oven more task-specific decoder modules for carrying out a respective number of visual perception tasks, the invention may be used in a particularly efficient way, since all of the decoder modules share the same fused set of feature maps or intermediate set of feature maps, respectively, for carrying out the different visual perception tasks.

The output of the respective decoder module according to the object height regression task comprises a height map in the top view perspective. For example, in case the first visual perception task is the object height regression task, the output of the first decoder module comprises the height map in the top view perspective. The height map in the top view perspective contains a predicted object height of one or more objects in the environment.

For example, the height map may correspond to a grid, wherein each grid cell of the grid is associated or located at a corresponding two-dimensional spatial position in the top view perspective, and the height map comprises a predicted or estimated height value for each of the grid cells. For example, the grid cells may be rectangular or quadratic cells with respective side lengths in the order of a centimeter or a few centimeters.

By fusing the information obtained from the at least one ultrasonic sensor signal and the information obtained from the camera image, the height map may be computed in a particularly reliable and accurate manner. The height map may be used as a valuable input for driver assistance functions or other automatic or semi-automatic driving function for the vehicle.

The output of the respective decoder module according to the semantic segmentation task comprises a semantically segmented image in the top view perspective. For example, in case the second visual perception task is the semantic segmentation task, the output of the second decoder module comprises the semantically segmented image in the top view perspective.

The semantically segmented image may be understood as a rectangular array of pixels, wherein an object class of a plurality of predefined object classes is assigned to each of the pixels. There may be a one-to-one correspondence between the pixels of the semantically segmented image and a version of the camera image projected or transformed into the top view perspective. This is, however, not necessarily the case as the resolution or size of the semantically segmented image may also differ from the correspondingly transformed camera image.

By fusing the information obtained from the at least one ultrasonic sensor signal and the information obtained from the camera image, the semantically segmented image may be computed in a particularly reliable and accurate manner. The semantically segmented image may be used as a valuable input for driver assistance functions or other automatic or semi-automatic driving function for the vehicle.

The output of the respective decoder module according to the bounding box detection task comprises a respective position and size of at least one bounding box in the top view perspective for at least one object in the environment. For example, if the third visual perception task corresponds to the bounding box detection task, the output of the third decoder module comprises the respective position and size of the at least one bounding box.

The bounding boxes may for example be rectangular bounding boxes. However, also other geometric figures may be used. For example, in case of a rectangular bounding box, its position may be given by a center position of the rectangle or a corner position of the rectangle or another defined position of the rectangle. In this case, the size of the bounding box may be given by a width and/or height of the rectangle or by equivalent quantities.

By fusing the information obtained from the at least one ultrasonic sensor signal and the information obtained from the camera image, the position and size of at least one bounding box may be computed in a particularly reliable and accurate manner. The position and size of at least one bounding box may be used as a valuable input for driver assistance functions or other automatic or semi-automatic driving function for the vehicle.

According to several implementations, the first encoder module comprises at least two encoder branches. By applying the first encoder module to the to the camera image, each of the at least two encoder branches generates a respective first feature map of the at least one first feature map, whose size is scaled down with respect to a size of the camera image according to a predefined scaling factor of the respective encoder branch.

Therein, the size of the camera image and the respective first feature maps correspond to the spatial size according to the camera image plane perspective, as mentioned above. In particular, the scaling factors of the at least two encoder branches may be realized by using accordingly adapted convolution kernels.

For example, the first encoder module comprises a feature extraction block and a feature augmentation block following the feature extraction block. Each of the at least two encoder branches comprises a corresponding portion of the feature extraction block and an associated portion of the feature augmentation block. While the feature extraction block extracts the image features according to the different scaling factors, the feature augmentation block may augment the spatial features with spatial contacts from other scales, for example, from lower scales.

The first encoder module may for example be designed as described in the publication of Roddick and Cipolla. Using the wording of said publication, the feature extraction block corresponds to the backbone network and the feature augmentation block corresponds to the feature pyramid or feature pyramid network.

Using the first encoder module with the at least two encoder branches as described, is particularly beneficial in combination with the transformation of the at least one first feature map into the top view perspective.

According to several implementations, the one or more first feature maps comprise at least two first feature maps, whose sizes are scaled down with respect to a size of the camera image according to different predefined scaling factors.

According to several implementations, fusing the transformed at least one first feature map and the at least one second feature map comprises concatenating the transformed at least one first feature map and the at least one second feature map.

In this way, a particularly efficient fusion without requiring substantial computation time may be achieved.

According to several implementations, the top view transformation module comprises a transformer pyramid network.

In particular, the top view transformation module comprises a respective transformer layer, in particular dense transformer layer, for each of the at least two encoder branches.

In this way, each of the at least one first feature maps may be transformed into the top view perspective according to its spatial dimension or scaling, respectively.

According to several implementations, for each of the at least one ultrasonic sensor signal, an amplitude of the respective ultrasonic sensor signal as a function of time is converted into an amplitude as a function of a radial distance from the ultrasonic sensor system. For each of the at least one ultrasonic sensor signal, a distributed amplitude is computed as a product of the amplitude as a function of the radial distance and a respective predefined angular distribution. Generating the ultrasonic map comprises or consists of summing the distributed amplitudes, in particular for all of the at least one ultrasonic sensor signals.

The angular distribution describes, for example, how the amplitude as a function of radial distance typically differs for different angles, in particular polar angles in the top view perspective. Apart from the angular distribution, also a radial cut off or maximum radial distance or a further radial cut off, namely a minimal radial distance, may be defined, wherein the value of the ultrasonic map is zero for radial distances below the minimum radial distance or above the maximum radial distance, for example.

Empirical, experimental or heuristic knowledge may be used to define the respective angular distributions. In this way, two-dimensional information may be obtained from the at least one ultrasonic sensor signal in a particularly simple manner. In general, the angular distributions may be different for different ultrasonic sensor signals. However, the angular distributions may also be identical up to a position shift and/or a rotation reflecting different positions of the ultrasonic emitter and/or detector.

The angular distribution may be considered as a representation of the emission and detection characteristics of the ultrasonic sensor system. In other words, the angular distribution may be considered to describe how large the amplitude of the respective ultrasonic sensor signal would be relatively in case of a given reflecting object in the environment of the vehicle would be positioned at different angles. The amplitude could eventually fall below the level of noise for very large angles, which is accounted for by using a corresponding angular distribution.

For example, the angular distribution may be given by at least one beta-distribution. The angular distribution may be given by a beta-distribution or by a weighted sum or an average or a minimum of two or more beta-distributions. In particular, in case the ultrasonic emitter and the respective ultrasonic detector generating the ultrasonic sensor signal are not located at the same position, an angular distribution may be considered for both positions, for example a beta-distribution may be considered for both positions, and the actual angular distribution may be given by the minimum or average or the like of the individual angular distributions for the different positions.

The beta-distribution may for example be given by ${f}_{p , q} \left(x\right) ∼ {x}^{p - 1} {\left(1-x\right)}^{q - 1} ,$ in particular with p = q = 2 such that ${f}_{2 , 2} \left(x\right) ∼ x \left(1-x\right) ,$ with an appropriate normalization factor. Therein, x denotes a quantity, which depends on, for example is proportional to, the polar angle in the top view perspective, in particular with respect to a longitudinal axis of the corresponding ultrasonic sensor of the ultrasonic sensor system. It has been found that in this way, the actual characteristics of the ultrasonic sensor system may be modelled well.

According to a further aspect of the invention, a method for guiding a vehicle, in particular a motor vehicle, at least in part automatically, is provided. The method comprises carrying out a method for automatic visual perception according to the invention. The method further comprises generating at least one control signal for guiding the vehicle at least in part automatically depending on a result of the first visual perception task.

The at least one control signal may for example be provided to one or more actuators of the vehicle, which affect or carry out a lateral output longitudinal control of the vehicle automatically or in part automatically.

For use cases or use situations which may arise in the method and which are not explicitly described here, it may be provided that, in accordance with the method, an error message and/or a prompt for user feedback is output and/or a default setting and/or a predetermined initial state is set.

According to a further aspect of the invention, an electronic vehicle guidance system for a vehicle is provided. The electronic vehicle guidance system comprises a camera for the vehicle, a storage device for the vehicle storing a trained artificial neural network, at least one computing unit for the vehicle and an ultrasonic sensor system for the vehicle. The camera is configured to generate a camera image representing an environment of the vehicle, in particular when mounted accordingly to the vehicle. The at least one computing unit is configured to generate at least one first feature map by applying a first encoder module of the neural network to the camera image. The at least one computing unit is configured to transform the at least one first feature map from a camera image plane perspective into a top view perspective by applying a top view transformation module of the neural network to the at least one first feature map.

The ultrasonic sensor system is configured to emit an ultrasonic pulse and to generate at least one ultrasonic sensor signal depending on reflected portions of the emitted ultrasonic pulse, in particular when mounted accordingly to the vehicle. The at least one computing unit is configured to generate a spatial ultrasonic map in the top view perspective depending on the at least one ultrasonic sensor signal and to generate at least one second feature map by applying a second encoder module of the neural network to the ultrasonic map. The at least one computing unit is configured to generate a fused set of feature maps by fusing the transformed at least one first feature map and the at least one second feature map and to carry out a first visual perception task depending on the fused set of feature maps by using a first decoder module of the neural network. The at least one computing unit is configured to generate at least one control signal for guiding the vehicle at least in part automatically depending on a result of the first visual perception task.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

If it is mentioned in the present disclosure that a component of the electronic vehicle guidance system according to the invention, in particular the at least one computing unit of the electronic vehicle guidance system, is adapted, configured or designed et cetera, to perform or realize a certain function, to achieve a certain effect or to serve a certain purpose, this can be understood such that the component, beyond being usable or suitable for this function, effect or purpose in principle or theoretically, is concretely and actually capable of executing or realizing the function, achieving the effect or serving the purpose by a corresponding adaptation, programming, physical design and so on.

Further implementations of the electronic vehicle guidance system according to the invention follow directly from the various embodiments of the method according to the invention and vice versa. In particular, individual features and corresponding explanations as well as advantages relating to the various implementations of the method according to the invention can be transferred analogously to corresponding implementations of the electronic vehicle guidance system according to the invention. In particular, the electronic vehicle guidance system according to the invention is designed or programmed to carry out the method according to the invention. In particular, the electronic vehicle guidance system according to the invention carries out the method according to the invention.

According to a further aspect of the invention, a vehicle, in particular a motor vehicle, comprising an electronic vehicle guidance system according to the invention is provided. Therein, the camera and the ultrasonic sensor system are mounted to the vehicle.

According to a further aspect of the invention, a computer program product comprising instructions is provided. When the instructions are executed by an electronic vehicle guidance system according to the invention, in particular by the at least one computing unit of the electronic vehicle guidance system, the instruction cause the electronic vehicle guidance system to carry out a method for automatic visual perception according to the invention or a method for guiding a vehicle at least in part automatically according to the invention.

According to a further aspect of the invention, a computer-readable storage medium is provided. The computer-readable storage medium stores a computer program according to the invention.

The computer program and the computer-readable storage medium may be denoted as respective computer program products comprising the instructions.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures:
- Fig. 1: shows schematically a motor vehicle according to an exemplary implementation of the invention;
- Fig. 2: shows schematically a block diagram representing an exemplary implementation of a method for automatic visual perception according to the invention;
- Fig. 3: shows a block diagram of a first encoder module of a neural network for use in a further exemplary implementation of a method for automatic visual perception according to the invention;
- Fig. 4: shows schematically the transformation of a feature map from a camera image plane into a top view perspective; and
- Fig. 5: shows schematically a part of a method according to a further exemplary implementation of the invention for automatic visual perception.

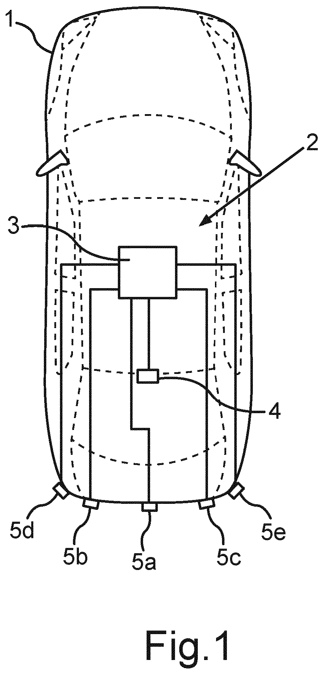

Fig. 1 shows an exemplary of a vehicle 1 according to the invention. The vehicle 1 comprises an exemplary implementation of an electronic vehicle guidance system 2 according to the invention.

The electronic vehicle guidance system 2 comprises a camera 4 mounted to the vehicle 1, for example, a rear-facing camera. The electronic vehicle guidance system 2 further comprises an ultrasonic sensor system, which contains one or more ultrasonic sensors 5a, 5b, 5c, 5d, 5e. Each ultrasonic sensors 5a, 5b, 5c, 5d, 5e may be operated as ab ultrasonic emitter and as an ultrasonic detector. However, also different implementations are conceivable. The ultrasonic sensors 5a, 5b, 5c, 5d, 5e are, for example, mounted to the vehicle 1 at a rear end, for example at or in a rear bumper of the vehicle 1. In particular, an overall field of view of the ultrasonic sensors 5a, 5b, 5c, 5d, 5e overlaps at least partially with the field of view of the camera 4.

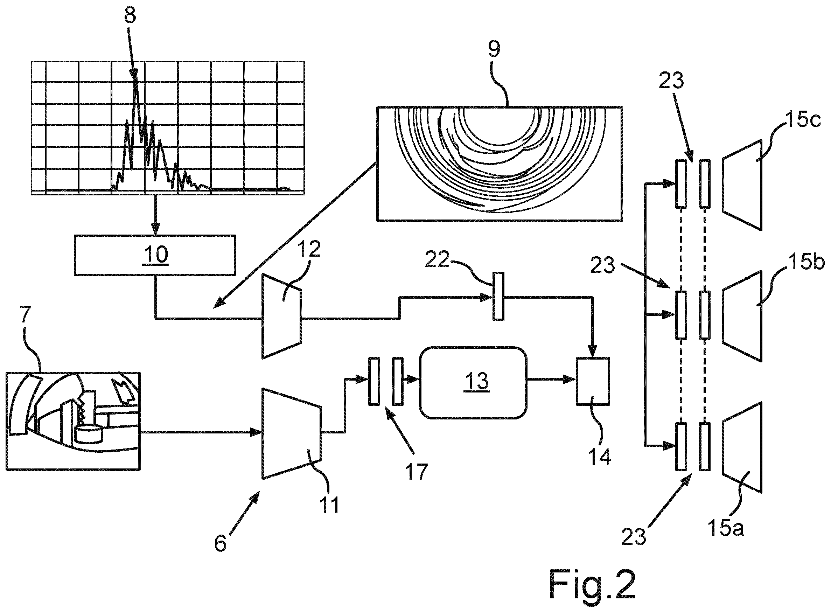

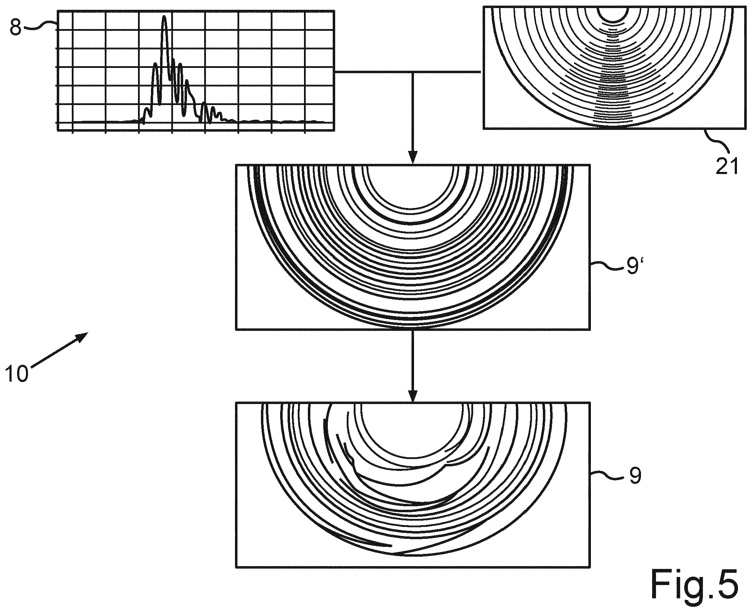

The electronic vehicle guidance system 2 further comprises a storage device (not shown) storing a trained artificial neural network 6 (see for example Fig. 2). The electronic vehicle guidance system 2 also comprises a computing unit 3, which may apply the artificial neural network 6 to input data, in particular to a camera image 7 (see for example Fig. 2) and an ultrasonic map 9 (see for example Fig. 2 and Fig. 5), to carry out one or more predefined visual perception tasks. The computing unit 3 may then generate at least one control signal for one or more actuators (not shown) of the vehicle 1 to guide the vehicle 1 at least in part automatically depending on respective results or outputs of the one or more visual perception tasks.

In particular, the electronic vehicle guidance system may carry out an exemplary implementation of a method for automatic visual perception according to the invention.

Fig. 2 shows a schematic block diagram representing such a method as well as the trained artificial neural network 6.

According to the method, the camera 4 generates the camera image 7, which represents an environment of the vehicle 1, and the ultrasonic sensor system, for example the ultrasonic sensors 5a, 5b, 5c, 5d, 5e, emit one or more ultrasonic pulses into the environment and detect reflected portions of the emitted ultrasonic pulses and generate at least one ultrasonic sensor signal 8 depending on the detected reflected portions.

The computing unit 3 generates a spatial ultrasonic map 9 in a top view perspective depending on the at least one ultrasonic sensor signal, wherein the ultrasonic map 9 contains a two-dimensional amplitude distribution in the top view perspective. To this end, the computing unit 3 may apply a software module 10, which may also be stored on the storage device, to the at least one ultrasonic sensor signal 8. For further details, it is referred to the explanations with respect to Fig. 5 further below.

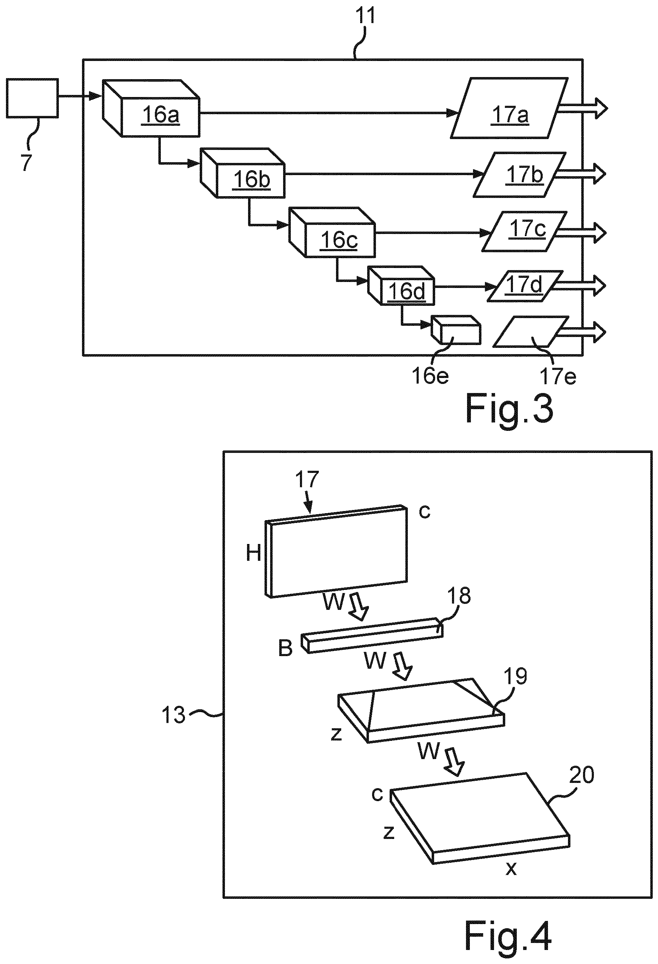

The computing unit 3 applies the neural network 6 to input data containing the ultrasonic map 9 and the camera image 7. In particular, at least one first feature map 17 is generated by applying a first encoder module 11 of the neural network 6 to the camera image 7. A top view transformation module 13 of the neural network 6 is applied to the at least one first feature map 17 to transform the at least one first feature map 17 from the camera image plane perspective into a top view perspective. For further details, it is referred to the explanations with respect to Fig. 3 and Fig. 4 below.

At least one second feature map 22 is generated by applying a second encoder module 12 of the neural network 6 to the ultrasonic map 9. A fused set of feature maps is generated by fusing the transformed at least one first feature map 20 (see, for example, Fig. 4) and the at least one second feature map 22, in particular by concatenating the transformed at least one first feature map 20 and the at least one second feature map 22. One or more visual perception tasks, in the present example of Fig. 2 three visual perception tasks, are carried out by one or more respective decoder modules 15a, 15b, 15c, in the present example of Fig. 2 a first decoder module 15a, a second decoder module 15b and a third decoder module 15c, of the neural network 6 depending on the fused set of feature maps.

For example, an intermediate set of feature maps 23 may be generated by applying a topdown network module 14 of the neural network 6 to the fused set of feature maps. The visual perception tasks may then be carried out by applying the respective decoder modules 15a, 15b, 15c to the intermediate set of feature maps 23. In particular, the first visual perception task, for example, an object height regression task, may be carried out by applying the first decoder module 15a to the intermediate set of feature maps 23, a second visual perception task, for example, a semantic segmentation task, may be carried out by applying the second decoder module 15b to the intermediate set of feature maps 23, and a third visual perception task, for example a bounding box detection task, may be carried out by applying the third decoder module 15c to the intermediate set of feature maps 23.

Generally, an encoder module of a neural network may comprise a series of convolution layers for deep feature extraction. Roughly speaking, the deeper the encoder, the better or more detailed the features. However, the type of encoder can be selected based on the constraints of the embedded platform. Standard encoder families such as ResNet, VGG, Inception may for example be employed.

The ultrasonic map 9 is for example a single channel top view map of the close surroundings of the vehicle 1. For example, it may be given on a grid with a size in the order of meters, for example 6 m x 12 m, an a cell side length in the order of centimeters, for example 1 cm. In this way, the maximum detection range of the ultrasonic sensors 5a, 5b, 5c, 5d, 5e, which is for example approximately 5 m, may be covered also taking into account their position relative to the camera 4, which defines the center of the coordinate system via projection on the ground surface. The ultrasonic map 9 may therefore be rather large and relatively sparse that is only a small area has a high amplitude. Thus second encoder module 12 is used to bring the ultrasonic map 9 input into the feature space where it can be matched with the transformed at least one first feature map 20 obtained from the camera image 7.

In particular, first the ultrasonic map 9 is converted into the at least one second feature map by passing through convolution layers of the second encoder module 12 in such a way that it outputs the feature of the same dimensions, namely height and width, as the output of the top view transformation module 13. Then, the feature maps are stacked along the depth or channel direction and passed through the convolution layers of the topdown network module 14. In particular, the second encoder module 12 transforms the sparse ultrasonic information contained in the ultrasonic map 9 into dense information in the top view perspective, namely the at least second feature map, which is then processed by the topdown network module 14, for example.

The first encoder module 11, as shown in more detail in the exemplary implementation of Fig. 3, may comprise a sequence of convolution layers 16a, 16b, 16c, 16d, 16e with different output scales and may involve regularization techniques. It may be designed as or comprise a feature pyramid network. The first encoder module 11 may take the camera image 7 as an input and generates the respective first feature maps 17a, 17b, 17c, 17d, 17e at different scales. For example, in Fig, 3, the first encoder module 11 generates five first feature maps 17a, 17b, 17c, 17d, 17e with scaling factors of 1/8, 1/16, 1/32, 1/64 and 1/128, respectively.

The top view transformation module 13 may for example be implemented as a dense transformer pyramid, as depicted schematically in Fig. 4. It converts the respective first feature map 17 to the top view perspective or, in other words, into a birds-eye-view feature map. The input and output coordinate systems may be entirely different from each other.

As shown in Fig. 4, a transformation layer converts the first feature map 17 of dimensions H x W with C channels to a transformed first feature map 20 in a top view plane with dimensions Z x X and with C channels. In the transformation layer, first the relationship between the full horizontal and specific vertical length of the camera image 7 and the top view map is created. Then, in an intermediate stage 18, the vertical dimension H and channel dimension C of the first feature map 20 are collapsed to a bottleneck of size B, while the vertical dimension W remains unchanged. Then, a 1D convolution is applied along the horizontal axis to reshape the resulting feature map to dimensions Z x X with C channels in a further intermediate stage 19. This process creates a trapezoid shape in the orthographic top view space due to perspective differences. Thus, it is converted into a cartesian coordinate frame by resampling using the known camera focal length of the camera 4 and a known horizontal offset.

The topdown network module 14 processes the transformed at least one first feature map and the at least one second feature map. The output of the topdown network module 14 is processed by the multiple decoder modules 15a, 15b, 15c for their individual purpose, for example for height regression, semantic segmentation and generating bounding boxes, respectively.

The at least one ultrasonic sensor signal 8 may result from time-series measurements and thus represent the ultrasonic echo amplitude recorded over a fixed time duration. Usually, peaks in the at least one ultrasonic sensor signal 8 stem from an object in the environment of the vehicle 1 reflecting the ultrasonic pulse emitted from one ultrasonic sensor 5a, 5b, 5c, 5d, 5e back to another or the same ultrasonic sensor 5a, 5b, 5c, 5d, 5e. Consequently, the distance the ultrasonic pulse has traveled before it is reflected can be computed, wherein for example the ambient temperature may be taken into account to determine the accurate speed of sound.

In order to transform the 1D amplitude data as a function of time into the spatial domain, one can calculate the distance of the echo and, in addition consider the ignorance about the angular position of the object reflecting the echo. It could be located on the longitudinal sensor axis of the ultrasonic sensor 5a, 5b, 5c, 5d, 5e, but due to their large field of view, it could also be off of the longitudinal sensor axis by a large angle. Up to 70° may be reasonable as long as the object is positioned to reflect back to the sensor before the echo amplitude drops to be no longer distinguishable from random noise.

As depicted schematically in Fig. 5, the software module 10 may calculate the ultrasonic map 9 representing the environment of the vehicle 1 in the top view perspective, in particular in a vehicle coordinate system, where the center of the rear axle of the vehicle 1 is in the origin of the coordinate system. The respective positions and orientations of the ultrasonic sensors 5a, 5b, 5c, 5d, 5e are predetermined and known.

Then a grid may be generated with approximately the size of the field of view of the ultrasonic sensors 5a, 5b, 5c, 5d, 5e and with a grid cell size that is small enough to offer sufficiently high resolution and still comparable to the distance resolution according to the at least one ultrasonic sensor signal 8. For example, quadratic grid cells with a side length of 1 cm may be used. The distance of every grid cell to the emitting ultrasonic sensors 5a, 5b, 5c, 5d, 5e and the receiving ultrasonic sensors 5a, 5b, 5c, 5d, 5e may be computed for each of the at least one ultrasonic sensor signal 8 and for each time step.

An angular distribution 21 that represents the likelihood of an object based on its angle from the longitudinal sensor axis is multiplied with the respective amplitude as a function of radial distance. The angular distribution 21 may be considered as scaling factors for the amplitudes. For example, a beta distribution may be used as shown schematically in Fig. 5. In case of non-identical emitting and receiving ultrasonic sensors 5a, 5b, 5c, 5d, 5e, which is also denoted as an indirect signal path, the minimum of the two calculated scaling factors may be use. However, also using a multiplication of both factors or the square root of both factors in general would be conceivable. The result is an intermediate ultrasonic map 9' for each of the at least one ultrasonic sensor signal 8. These may be summed up to obtain the ultrasonic map 9.

As described, in particular with respect to the figures, in several implementations, the invention allows for CNN based low object detection, semantic segmentation and height regression in the top view domain using a camera image, in particular a fish-eye camera image, and ultrasonic data.

## Claims

1. Method for automatic visual perception with a vehicle (1), wherein
- a camera image (7) representing an environment of the vehicle (1) is generated by a camera (4) of the vehicle (1) and at least one first feature map (17, 17a, 17b, 17c, 17d, 17e) is generated by applying a first encoder module (11) of a trained artificial neural network (6) to the camera image (7);
- a top view transformation module (13) of the neural network (6) is applied to the at least one first feature map (17, 17a, 17b, 17c, 17d, 17e) to transform the at least one first feature map (17, 17a, 17b, 17c, 17d, 17e) from a camera image plane perspective into a top view perspective;
- an ultrasonic pulse is emitted into the environment by an ultrasonic sensor system (5a, 5b, 5c, 5d, 5e) of the vehicle (1) and at least one ultrasonic sensor signal (8) is generated by the ultrasonic sensor system (5a, 5b, 5c, 5d, 5e) depending on reflected portions of the emitted ultrasonic pulse;
- a spatial ultrasonic map (9) is generated in the top view perspective depending on the at least one ultrasonic sensor signal (8);
- at least one second feature map is generated by applying a second encoder module (12) of the neural network (6) to the ultrasonic map (9);
- a fused set of feature maps is generated by fusing the transformed at least one first feature map (20) and the at least one second feature map (22); and
- a first visual perception task is carried out by a first decoder module (15a, 15b, 15c) of the neural network (6) depending on the fused set of feature maps.

2. Method according to claim 1,
**characterized in that**
- an intermediate set of feature maps is generated by applying a topdown network module (14) of the neural network (6) to the fused set of feature maps; and
- the first visual perception task is carried out by applying the first decoder module (15a, 15b, 15c) to the intermediate set of feature maps.

3. Method according to claim 2,
**characterized in that**
a second visual perception task is carried out by a second decoder module (15a, 15b, 15c) of the neural network (6) depending on the fused set of feature maps.

4. Method according to claim 3,
**characterized in that**
the second visual perception task is carried out by applying the second decoder module (15a, 15b, 15c) to the intermediate set of feature maps.

5. Method according to one of claims 3 or 4,
**characterized in that**
- the first visual perception task is an object height regression task and an output of the first decoder module (15a, 15b, 15c) comprises a height map in the top view perspective, which contains a predicted object height of one or more objects in the environment; and/or
- the second visual perception task is a semantic segmentation task and an output of the second decoder module (15a, 15b, 15c) comprises a semantically segmented image in the top view perspective; and/or
- a third visual perception task is carried out by a third decoder module (15a, 15b, 15c) of the neural network (6) depending on the fused set of feature maps, wherein the third visual perception task is a bounding box detection task and an output of the third decoder module (15a, 15b, 15c) comprises a respective position and size of at least one bounding box in the top view perspective for one or more objects in the environment.

6. Method according to one of claims 1 to 4,
**characterized in that**
- the first visual perception task is an object height regression task and an output of the first decoder module (15a, 15b, 15c) comprises a height map in the top view perspective, which contains a predicted object height of one or more objects in the environment; or
- the first visual perception task is a semantic segmentation task and an output of the first decoder module (15a, 15b, 15c) comprises a semantically segmented image in the top view perspective; or
- the first visual perception task is a bounding box detection task and an output of the first decoder module (15a, 15b, 15c) comprises a respective position and size of at least one bounding box in the top view perspective for at least one object in the environment.

7. Method according to one of the preceding claims,
**characterized in that**
- the first encoder module (11) comprises at least two encoder branches (16a, 16b, 16c, 16d, 16e);
- by applying the first encoder module (11) to the to the camera image (7), each of the at least two encoder branches (16a, 16b, 16c, 16d, 16e) generates a respective first feature map of the at least one first feature map (17, 17a, 17b, 17c, 17d, 17e), whose size is scaled down with respect to a size of the camera image (7) according to a predefined scaling factor of the respective encoder branch (16a, 16b, 16c, 16d, 16e).

8. Method according to one of claims 1 to 6,
**characterized in that**
the one or more first feature maps (17, 17a, 17b, 17c, 17d, 17e) comprise at least two first feature maps (17, 17a, 17b, 17c, 17d, 17e), whose sizes are scaled down with respect to a size of the camera image (7) according to different predefined scaling factors.

9. Method according to one of the preceding claims,
**characterized in that**
fusing the transformed at least one first feature map (20) and the at least one second feature map comprises concatenating the transformed at least one first feature map (20) and the at least one second feature map.

10. Method according to one of the preceding claims,
**characterized in that**
the top view transformation module (13) comprises a transformer pyramid network.

11. Method according to one of the preceding claims,
**characterized in that**
- for each of the at least one ultrasonic sensor signal (8), an amplitude of the respective ultrasonic sensor signal (8) as a function of time is converted into an amplitude as a function of a radial distance from the ultrasonic sensor system (5a, 5b, 5c, 5d, 5e);
- for each of the at least one ultrasonic sensor signal (8), a distributed amplitude is computed as a product of the amplitude as a function of the radial distance and a respective predefined angular distribution (21); and
- generating the ultrasonic map (9) comprises summing the distributed amplitudes.

12. Method according to claim 11,
**characterized in that**
the angular distribution is given by at least one beta-distribution.

13. Electronic vehicle guidance system (2) for a vehicle (1) comprising a camera (4), a storage device storing a trained artificial neural network (6), at least one computing unit (3) and an ultrasonic sensor system (5a, 5b, 5c, 5d, 5e), wherein
- the camera (4) is configured to generate a camera image (7) representing an environment of the vehicle (1);
- the at least one computing unit (3) is configured to generate at least one first feature map (17, 17a, 17b, 17c, 17d, 17e) by applying a first encoder module (11) of the neural network (6) to the camera image (7);
- the at least one computing unit (3) is configured to transform the at least one first feature map (17, 17a, 17b, 17c, 17d, 17e) from a camera image plane perspective into a top view perspective by applying a top view transformation module (13) of the neural network (6) to the at least one first feature map (17, 17a, 17b, 17c, 17d, 17e);
- the ultrasonic sensor system (5a, 5b, 5c, 5d, 5e) is configured to emit an ultrasonic pulse and to generate at least one ultrasonic sensor signal (8) depending on reflected portions of the emitted ultrasonic pulse;
- the at least one computing unit (3) is configured to generate a spatial ultrasonic map (9) in the top view perspective depending on the at least one ultrasonic sensor signal (8) and to generate at least one second feature map by applying a second encoder module (12) of the neural network (6) to the ultrasonic map (9);
- the at least one computing unit (3) is configured to generate a fused set of feature maps by fusing the transformed at least one first feature map (20) and the at least one second feature map and to carry out a first visual perception task depending on the fused set of feature maps by using a first decoder module (15a, 15b, 15c) of the neural network (6); and
- the at least one computing unit (3) is configured to generate at least one control signal for guiding the vehicle (1) at least in part automatically depending on a result of the first visual perception task.

14. Vehicle (1) comprising an electronic vehicle guidance system (2) according to claim 13, wherein the camera (4) and the ultrasonic sensor system (5a, 5b, 5c, 5d, 5e) are mounted at the vehicle (1).

15. Computer program product comprising instructions, which, when executed by an electronic vehicle guidance system (2) according to claim 13, cause the electronic vehicle guidance system (2) to carry out a method according to one of claims 1 to 12.

## Patentansprüche

1. Verfahren zur automatischen visuellen Wahrnehmung mit einem Fahrzeug (1), wobei
- ein Kamerabild (7), das eine Umgebung des Fahrzeugs (1) darstellt, von einer Kamera (4) des Fahrzeugs (1) erzeugt wird und mindestens eine erste Merkmalskarte (17, 17a, 17b, 17c, 17d, 17e) durch Anwendung eines ersten Encodermoduls (11) eines trainierten künstlichen neuronalen Netzes (6) auf das Kamerabild (7) erzeugt wird;
- ein Draufsicht-Transformationsmodul (13) des neuronalen Netzes (6) auf die mindestens eine erste Merkmalskarte (17, 17a, 17b, 17c, 17d, 17e) angewendet wird, um die mindestens eine erste Merkmalskarte (17, 17a, 17b, 17c, 17d, 17e) von einer Kamerabildebenen-Perspektive in eine Draufsichtperspektive zu transformieren;
- ein Ultraschallimpuls von einem Ultraschallsensorsystem (5a, 5b, 5c, 5d, 5e) des Fahrzeugs (1) in die Umgebung ausgesendet wird und mindestens ein Ultraschallsensorsignal (8) vom Ultraschallsensorsystem (5a, 5b, 5c, 5d, 5e) abhängig von reflektierten Anteilen des ausgesendeten Ultraschallimpulses erzeugt wird;
- eine räumliche Ultraschallkarte (9) in der Draufsichtperspektive abhängig von dem mindestens einen Ultraschallsensorsignal (8) erzeugt wird;
- mindestens eine zweite Merkmalskarte durch Anwendung eines zweiten Encodermoduls (12) des neuronalen Netzes (6) auf die Ultraschallkarte (9) erzeugt wird;
- ein fusionierter Satz von Merkmalskarten durch Fusionieren der transformierten mindestens einen ersten Merkmalskarte (20) und der mindestens einen zweiten Merkmalskarte (22) erzeugt wird; und
- eine erste visuelle Wahrnehmungsaufgabe von einem ersten Decodermodul (15a, 15b, 15c) des neuronalen Netzes (6) abhängig von dem fusionierten Satz von Merkmalskarten durchgeführt wird.

2. Verfahren nach Anspruch 1, **dadurch gekennzeichnet, dass**
- ein Zwischensatz von Merkmalskarten durch Anwendung eines Topdown-Netzwerkmoduls (14) des neuronalen Netzes (6) auf den fusionierten Satz von Merkmalskarten erzeugt wird; und
- die erste visuelle Wahrnehmungsaufgabe durch Anwendung des ersten Decodermoduls (15a, 15b, 15c) auf den Zwischensatz von Merkmalskarten durchgeführt wird.

3. Verfahren nach Anspruch 2, **dadurch gekennzeichnet, dass**
- eine zweite visuelle Wahrnehmungsaufgabe von einem zweiten Decodermodul (15a, 15b, 15c) des neuronalen Netzes (6) abhängig von dem fusionierten Satz von Merkmalskarten durchgeführt wird.

4. Verfahren nach Anspruch 3, **dadurch gekennzeichnet, dass**
- die zweite visuelle Wahrnehmungsaufgabe durch Anwendung des zweiten Decodermoduls (15a, 15b, 15c) auf den Zwischensatz von Merkmalskarten durchgeführt wird.

5. Verfahren nach einem der Ansprüche 3 oder 4, **dadurch gekennzeichnet, dass**
- die erste visuelle Wahrnehmungsaufgabe eine Objekthöhen-Regressionsaufgabe ist und eine Ausgabe des ersten Decodermoduls (15a, 15b, 15c) eine Höhenkarte in der Draufsichtperspektive umfasst, die eine vorhergesagte Objekthöhe eines oder mehrerer Objekte in der Umgebung enthält; und/oder
- die zweite visuelle Wahrnehmungsaufgabe eine semantische Segmentierungsaufgabe ist und eine Ausgabe des zweiten Decodermoduls (15a, 15b, 15c) ein semantisch segmentiertes Bild in der Draufsichtperspektive umfasst; und/oder
- eine dritte visuelle Wahrnehmungsaufgabe von einem dritten Decodermodul (15a, 15b, 15c) des neuronalen Netzes (6) abhängig von dem fusionierten Satz von Merkmalskarten durchgeführt wird, wobei die dritte visuelle Wahrnehmungsaufgabe eine Bounding-Box-Erkennungsaufgabe ist und eine Ausgabe des dritten Decodermoduls (15a, 15b, 15c) eine jeweilige Position und Größe mindestens einer Bounding Box in der Draufsichtperspektive für ein oder mehrere Objekte in der Umgebung umfasst.

6. Verfahren nach einem der Ansprüche 1 bis 4, **dadurch gekennzeichnet, dass**
- die erste visuelle Wahrnehmungsaufgabe eine Objekthöhen-Regressionsaufgabe ist und eine Ausgabe des ersten Decodermoduls (15a, 15b, 15c) eine Höhenkarte in der Draufsichtperspektive umfasst, die eine vorhergesagte Objekthöhe eines oder mehrerer Objekte in der Umgebung enthält; oder
- die erste visuelle Wahrnehmungsaufgabe eine semantische Segmentierungsaufgabe ist und eine Ausgabe des ersten Decodermoduls (15a, 15b, 15c) ein semantisch segmentiertes Bild in der Draufsichtperspektive umfasst; oder
- die erste visuelle Wahrnehmungsaufgabe eine Bounding-Box-Erkennungsaufgabe ist und eine Ausgabe des ersten Decodermoduls (15a, 15b, 15c) eine jeweilige Position und Größe mindestens einer Bounding Box in der Draufsichtperspektive für mindestens ein Objekt in der Umgebung umfasst.

7. Verfahren nach einem der vorhergehenden Ansprüche, **dadurch gekennzeichnet, dass**
- das erste Encodermodul (11) mindestens zwei Encoder-Zweige (16a, 16b, 16c, 16d, 16e) umfasst;
- durch Anwendung des ersten Encodermoduls (11) auf das Kamerabild (7) jeder der mindestens zwei Encoder-Zweige (16a, 16b, 16c, 16d, 16e) eine jeweilige erste Merkmalskarte der mindestens einen ersten Merkmalskarte (17, 17a, 17b, 17c, 17d, 17e) erzeugt, deren Größe gegenüber einer Größe des Kamerabildes (7) gemäß einem vordefinierten Skalierungsfaktor des jeweiligen Encoder-Zweigs (16a, 16b, 16c, 16d, 16e) verkleinert ist.

8. Verfahren nach einem der Ansprüche 1 bis 6, **dadurch gekennzeichnet, dass**
- die eine oder mehreren ersten Merkmalskarten (17, 17a, 17b, 17c, 17d, 17e) mindestens zwei erste Merkmalskarten (17, 17a, 17b, 17c, 17d, 17e) umfassen, deren Größen gegenüber einer Größe des Kamerabildes (7) gemäß unterschiedlichen vordefinierten Skalierungsfaktoren verkleinert sind.

9. Verfahren nach einem der vorhergehenden Ansprüche, **dadurch gekennzeichnet, dass**
- das Fusionieren der transformierten mindestens einen ersten Merkmalskarte (20) und der mindestens einen zweiten Merkmalskarte das Konkatenieren der transformierten mindestens einen ersten Merkmalskarte (20) und der mindestens einen zweiten Merkmalskarte umfasst.

10. Verfahren nach einem der vorhergehenden Ansprüche, **dadurch gekennzeichnet, dass**
- das Draufsicht-Transformationsmodul (13) ein Transformer-Pyramiden-Netzwerk umfasst.

11. Verfahren nach einem der vorhergehenden Ansprüche, **dadurch gekennzeichnet, dass**
- für jedes der mindestens einen Ultraschallsensorsignale (8) eine Amplitude des jeweiligen Ultraschallsensorsignals (8) als Funktion der Zeit in eine Amplitude als Funktion eines radialen Abstands vom Ultraschallsensorsystem (5a, 5b, 5c, 5d, 5e) umgewandelt wird;
- für jedes der mindestens einen Ultraschallsensorsignale (8) eine verteilte Amplitude als Produkt der Amplitude als Funktion des radialen Abstands und einer jeweiligen vordefinierten Winkelverteilung (21) berechnet wird; und
- das Erzeugen der Ultraschallkarte (9) das Aufsummieren der verteilten Amplituden umfasst.

12. Verfahren nach Anspruch 11, **dadurch gekennzeichnet, dass**
- die Winkelverteilung durch mindestens eine Beta-Verteilung gegeben ist.

13. Elektronisches Fahrzeugführungssystem (2) für ein Fahrzeug (1), umfassend eine Kamera (4), eine Speichervorrichtung, die ein trainiertes künstliches neuronales Netz (6) speichert, mindestens eine Recheneinheit (3) und ein Ultraschallsensorsystem (5a, 5b, 5c, 5d, 5e), wobei
- die Kamera (4) dazu konfiguriert ist, ein Kamerabild (7) zu erzeugen, das eine Umgebung des Fahrzeugs (1) darstellt;
- die mindestens eine Recheneinheit (3) dazu konfiguriert ist, mindestens eine erste Merkmalskarte (17, 17a, 17b, 17c, 17d, 17e) durch Anwendung eines ersten Encodermoduls (11) des neuronalen Netzes (6) auf das Kamerabild (7) zu erzeugen;
- die mindestens eine Recheneinheit (3) dazu konfiguriert ist, die mindestens eine erste Merkmalskarte (17, 17a, 17b, 17c, 17d, 17e) von einer Kamerabildebenen-Perspektive in eine Draufsichtperspektive zu transformieren, indem ein Draufsicht-Transformationsmodul (13) des neuronalen Netzes (6) auf die mindestens eine erste Merkmalskarte (17, 17a, 17b, 17c, 17d, 17e) angewendet wird;
- das Ultraschallsensorsystem (5a, 5b, 5c, 5d, 5e) dazu konfiguriert ist, einen Ultraschallimpuls auszusenden und mindestens ein Ultraschallsensorsignal (8) abhängig von reflektierten Anteilen des ausgesendeten Ultraschallimpulses zu erzeugen;
- die mindestens eine Recheneinheit (3) dazu konfiguriert ist, eine räumliche Ultraschallkarte (9) in der Draufsichtperspektive abhängig von dem mindestens einen Ultraschallsensorsignal (8) zu erzeugen und mindestens eine zweite Merkmalskarte durch Anwendung eines zweiten Encodermoduls (12) des neuronalen Netzes (6) auf die Ultraschallkarte (9) zu erzeugen;
- die mindestens eine Recheneinheit (3) dazu konfiguriert ist, einen fusionierten Satz von Merkmalskarten durch Fusionieren der transformierten mindestens einen ersten Merkmalskarte (20) und der mindestens einen zweiten Merkmalskarte zu erzeugen und eine erste visuelle Wahrnehmungsaufgabe abhängig von dem fusionierten Satz von Merkmalskarten unter Verwendung eines ersten Decodermoduls (15a, 15b, 15c) des neuronalen Netzes (6) durchzuführen; und
- die mindestens eine Recheneinheit (3) dazu konfiguriert ist, mindestens ein Steuersignal zur zumindest teilweise automatischen Führung des Fahrzeugs (1) abhängig von einem Ergebnis der ersten visuellen Wahrnehmungsaufgabe zu erzeugen.

14. Fahrzeug (1) umfassend ein elektronisches Fahrzeugführungssystem (2) nach Anspruch 13, wobei die Kamera (4) und das Ultraschallsensorsystem (5a, 5b, 5c, 5d, 5e) am Fahrzeug (1) montiert sind.

15. Computerprogrammprodukt umfassend Anweisungen, die, wenn sie von einem elektronischen Fahrzeugführungssystem (2) nach Anspruch 13 ausgeführt werden, das elektronische Fahrzeugführungssystem (2) veranlassen, ein Verfahren nach einem der Ansprüche 1 bis 12 durchzuführen.

## Revendications

1. Procédé de perception visuelle automatique avec un véhicule (1), dans lequel
- une image de caméra (7) représentant un environnement du véhicule (1) est générée par une caméra (4) du véhicule (1) et au moins une première carte de caractéristiques (17, 17a, 17b, 17c, 17d, 17e) est générée en appliquant un premier module encodeur (11) d'un réseau neuronal artificiel entraîné (6) à l'image de caméra (7) ;
- un module de transformation en vue de dessus (13) du réseau neuronal (6) est appliqué à l'au moins une première carte de caractéristiques (17, 17a, 17b, 17c, 17d, 17e) pour transformer l'au moins une première carte de caractéristiques (17, 17a, 17b, 17c, 17d, 17e) depuis une perspective de plan d'image de caméra vers une perspective en vue de dessus ;
- une impulsion ultrasonique est émise dans l'environnement par un système de capteurs ultrasoniques (5a, 5b, 5c, 5d, 5e) du véhicule (1) et au moins un signal de capteur ultrasonique (8) est généré par le système de capteurs ultrasoniques (5a, 5b, 5c, 5d, 5e) en fonction des portions réfléchies de l'impulsion ultrasonique émise ;
- une carte ultrasonique spatiale (9) est générée dans la perspective en vue de dessus en fonction de l'au moins un signal de capteur ultrasonique (8) ;
- au moins une deuxième carte de caractéristiques est générée en appliquant un deuxième module encodeur (12) du réseau neuronal (6) à la carte ultrasonique (9) ;
- un ensemble fusionné de cartes de caractéristiques est généré en fusionnant l'au moins une première carte de caractéristiques transformée (20) et l'au moins une deuxième carte de caractéristiques (22) ; et
- une première tâche de perception visuelle est effectuée par un premier module décodeur (15a, 15b, 15c) du réseau neuronal (6) en fonction de l'ensemble fusionné de cartes de caractéristiques.

2. Procédé selon la revendication 1, **caractérisé en ce que**
- un ensemble intermédiaire de cartes de caractéristiques est généré en appliquant un module de réseau descendant (14) du réseau neuronal (6) à l'ensemble fusionné de cartes de caractéristiques ; et
- la première tâche de perception visuelle est effectuée en appliquant le premier module décodeur (15a, 15b, 15c) à l'ensemble intermédiaire de cartes de caractéristiques.

3. Procédé selon la revendication 2, **caractérisé en ce que**
- une deuxième tâche de perception visuelle est effectuée par un deuxième module décodeur (15a, 15b, 15c) du réseau neuronal (6) en fonction de l'ensemble fusionné de cartes de caractéristiques.

4. Procédé selon la revendication 3, **caractérisé en ce que**
- la deuxième tâche de perception visuelle est effectuée en appliquant le deuxième module décodeur (15a, 15b, 15c) à l'ensemble intermédiaire de cartes de caractéristiques.

5. Procédé selon l'une des revendications 3 ou 4, **caractérisé en ce que**
- la première tâche de perception visuelle est une tâche de régression de hauteur d'objet et une sortie du premier module décodeur (15a, 15b, 15c) comprend une carte de hauteur dans la perspective en vue de dessus, qui contient une hauteur d'objet prédite d'un ou plusieurs objets dans l'environnement ; et/ou
- la deuxième tâche de perception visuelle est une tâche de segmentation sémantique et une sortie du deuxième module décodeur (15a, 15b, 15c) comprend une image sémantiquement segmentée dans la perspective en vue de dessus ; et/ou
- une troisième tâche de perception visuelle est effectuée par un troisième module décodeur (15a, 15b, 15c) du réseau neuronal (6) en fonction de l'ensemble fusionné de cartes de caractéristiques, la troisième tâche de perception visuelle étant une tâche de détection de boîte englobante et une sortie du troisième module décodeur (15a, 15b, 15c) comprenant une position et une taille respectives d'au moins une boîte englobante dans la perspective en vue de dessus pour un ou plusieurs objets dans l'environnement.

6. Procédé selon l'une des revendications 1 à 4, **caractérisé en ce que**
- la première tâche de perception visuelle est une tâche de régression de hauteur d'objet et une sortie du premier module décodeur (15a, 15b, 15c) comprend une carte de hauteur dans la perspective en vue de dessus, qui contient une hauteur d'objet prédite d'un ou plusieurs objets dans l'environnement ; ou
- la première tâche de perception visuelle est une tâche de segmentation sémantique et une sortie du premier module décodeur (15a, 15b, 15c) comprend une image sémantiquement segmentée dans la perspective en vue de dessus ; ou
- la première tâche de perception visuelle est une tâche de détection de boîte englobante et une sortie du premier module décodeur (15a, 15b, 15c) comprend une position et une taille respectives d'au moins une boîte englobante dans la perspective en vue de dessus pour au moins un objet dans l'environnement.

7. Procédé selon l'une des revendications précédentes, **caractérisé en ce que**
- le premier module encodeur (11) comprend au moins deux branches d'encodeur (16a, 16b, 16c, 16d, 16e) ;
- en appliquant le premier module encodeur (11) à l'image de caméra (7), chacune des au moins deux branches d'encodeur (16a, 16b, 16c, 16d, 16e) génère une première carte de caractéristiques respective de l'au moins une première carte de caractéristiques (17, 17a, 17b, 17c, 17d, 17e), dont la taille est réduite par rapport à une taille de l'image de caméra (7) selon un facteur d'échelle prédéfini de la branche d'encodeur respective (16a, 16b, 16c, 16d, 16e).

8. Procédé selon l'une des revendications 1 à 6, **caractérisé en ce que**
- la ou les premières cartes de caractéristiques (17, 17a, 17b, 17c, 17d, 17e) comprennent au moins deux premières cartes de caractéristiques (17, 17a, 17b, 17c, 17d, 17e), dont les tailles sont réduites par rapport à une taille de l'image de caméra (7) selon différents facteurs d'échelle prédéfinis.

9. Procédé selon l'une des revendications précédentes, **caractérisé en ce que**
- la fusion de l'au moins une première carte de caractéristiques transformée (20) et de l'au moins une deuxième carte de caractéristiques comprend la concaténation de l'au moins une première carte de caractéristiques transformée (20) et de l'au moins une deuxième carte de caractéristiques.

10. Procédé selon l'une des revendications précédentes, **caractérisé en ce que**
- le module de transformation en vue de dessus (13) comprend un réseau pyramidal de transformateurs.

11. Procédé selon l'une des revendications précédentes, **caractérisé en ce que**
- pour chacun des au moins un signal de capteur ultrasonique (8), une amplitude du signal de capteur ultrasonique respectif (8) en fonction du temps est convertie en une amplitude en fonction d'une distance radiale par rapport au système de capteurs ultrasoniques (5a, 5b, 5c, 5d, 5e) ;
- pour chacun des au moins un signal de capteur ultrasonique (8), une amplitude distribuée est calculée comme un produit de l'amplitude en fonction de la distance radiale et d'une distribution angulaire prédéfinie respective (21) ; et
- la génération de la carte ultrasonique (9) comprend la sommation des amplitudes distribuées.

12. Procédé selon la revendication 11, **caractérisé en ce que**
- la distribution angulaire est donnée par au moins une distribution bêta.

13. Système électronique de guidage de véhicule (2) pour un véhicule (1) comprenant une caméra (4), un dispositif de stockage stockant un réseau neuronal artificiel entraîné (6), au moins une unité de calcul (3) et un système de capteurs ultrasoniques (5a, 5b, 5c, 5d, 5e), dans lequel
- la caméra (4) est configurée pour générer une image de caméra (7) représentant un environnement du véhicule (1) ;
- l'au moins une unité de calcul (3) est configurée pour générer au moins une première carte de caractéristiques (17, 17a, 17b, 17c, 17d, 17e) en appliquant un premier module encodeur (11) du réseau neuronal (6) à l'image de caméra (7) ;
- l'au moins une unité de calcul (3) est configurée pour transformer l'au moins une première carte de caractéristiques (17, 17a, 17b, 17c, 17d, 17e) depuis une perspective de plan d'image de caméra vers une perspective en vue de dessus en appliquant un module de transformation en vue de dessus (13) du réseau neuronal (6) à l'au moins une première carte de caractéristiques (17, 17a, 17b, 17c, 17d, 17e) ;
- le système de capteurs ultrasoniques (5a, 5b, 5c, 5d, 5e) est configuré pour émettre une impulsion ultrasonique et pour générer au moins un signal de capteur ultrasonique (8) en fonction des portions réfléchies de l'impulsion ultrasonique émise ;
- l'au moins une unité de calcul (3) est configurée pour générer une carte ultrasonique spatiale (9) dans la perspective en vue de dessus en fonction de l'au moins un signal de capteur ultrasonique (8) et pour générer au moins une deuxième carte de caractéristiques en appliquant un deuxième module encodeur (12) du réseau neuronal (6) à la carte ultrasonique (9) ;
- l'au moins une unité de calcul (3) est configurée pour générer un ensemble fusionné de cartes de caractéristiques en fusionnant l'au moins une première carte de caractéristiques transformée (20) et l'au moins une deuxième carte de caractéristiques et pour effectuer une première tâche de perception visuelle en fonction de l'ensemble fusionné de cartes de caractéristiques en utilisant un premier module décodeur (15a, 15b, 15c) du réseau neuronal (6) ; et
- l'au moins une unité de calcul (3) est configurée pour générer au moins un signal de commande pour guider le véhicule (1) au moins en partie automatiquement en fonction d'un résultat de la première tâche de perception visuelle.

14. Véhicule (1) comprenant un système électronique de guidage de véhicule (2) selon la revendication 13, dans lequel la caméra (4) et le système de capteurs ultrasoniques (5a, 5b, 5c, 5d, 5e) sont montés sur le véhicule (1).

15. Produit de programme informatique comprenant des instructions qui, lorsqu'elles sont exécutées par un système électronique de guidage de véhicule (2) selon la revendication 13, amènent le système électronique de guidage de véhicule (2) à mettre en œuvre un procédé selon l'une des revendications 1 à 12.
